# EUROPEAN PATENT SPECIFICATION

(11) **EP 3 670 983 B1**
(45) Date of publication and mention of the grant of the patent: **19.07.2023**
(21) Application number: 19210292.9
(22) Date of filing: 20.11.2019
(51) Int. Cl.: F16L 1/24

(54) **A FERRY AND A METHOD FOR ASSEMBLING WEIGHTS ON UNDERWATER PIPES**
FÄHRE UND VERFAHREN ZUR MONTAGE VON GEWICHTEN AN UNTERWASSERROHREN
FERRY ET PROCÉDÉ D'ASSEMBLAGE DE POIDS SUR DES TUYAUX SOUS L'EAU

(30) Priority: 20.12.2018 FI 20186115
(43) Date of publication of application: 24.06.2020
(73) Proprietor: Dyke Engineering Oy, 00211 Helsinki (FI)
(72) Inventor: VALLI, Tuomas, 00200 Helsinki (FI)
(74) Representative: Heinonen & Co

(56) References cited:
- EP-A1- 3 390 876
- AU-A1- 2003 235 014
- KR-B1- 100 924 495
- RU-C1- 2 664 323

## Description

### Technical field

Generally, the invention relates to a ferry and a method for assembling weights on underwater pipes.

### Background technology

Laying pipes on the bottom of a sea or a lake requires weights for anchoring the pipes on its place. In this way, it is ensured that the pipes will not move or rise. The assembling of the weights is laborious and difficult procedure requiring heavy crane for lifting weights to the ferry.

Because weights are heavy, the ferry may be able to transfer only a limit number of weights at the time, and thus, several trips are required to transfer all the weights to the assembly site, which may take a lot of time and can be very costly. In order to lift the weights from the ferry and lower the weights to a desired place, the ferry may also need a crane for that. This increases the weight of the ferry and takes space from the weight to be carried.

The document AU 2003235014 A1 sets forth a device for stabilizing the position of a pipeline installed on a seabed or riverbed comprising at least one elongated envelope, which envelope is filled with a granular material. The elongated envelope is lowered on the pipeline by a stabilisation device, which stabilisation device can be moved to a position just above the pipeline to be stabilised by means of a hoisting device present on a vessel.The document RU 2664323 C1 discloses a device for ballasting an underwater pipeline including paired horizontal cylindrical weighting agents located to the right and left of the underwater pipeline, they are connected by power belts covering the underwater pipeline from above. Paired horizontal cylindrical weighting agents are located in the pit and are connected by screeds located under the underwater pipeline. Specified gap between the weighting elements when installed on an underwater pipeline is provided by spacer wooden beams.

The document EP 3390876 A1 discloses a system for at least partly covering a structure on a seabed comprising a resilient covering element, a suspension device and a plurality of connection means. The connection means are releasably connected to the suspension device and the resilient covering element. The plurality of connection means are arranged in at least three rows on the suspension device, a middle portion of the resilient covering element is suspended by a central row, and a cavity is formed underneath at least a portion of the resilient covering element.

Further, the document KR 100924495 B1 discloses a method for installing a deep water intake unit comprises following steps. A plurality of weights pass through each pipe at constant intervals and the weight is prevented from being moved by forming a movement prevention projection at the both sides of the outer circumference of the pipe. A shallow sea pipe is made by connecting a plurality of pipes in which the weight is installed and welding the ends of the pipes which are contacted with each other. A deep sea pipe is manufactured by connecting a plurality of pipes in which the weight is installed and welding the ends of the pipes which are contacted with each other. A seafloor of the shallow sea area is dredged to a dredging device and the shallow sea pipe is installed. A cover is installed between the weights of the shallow sea pipe. Earth and sand are covered on the upper surface of the shallow sea pipe.

### Summary of the invention

It is an objective of the present invention to implement such a solution, that the previously mentioned drawbacks of the prior art could be diminished. In particular, the invention is implied to solve how to easily transfer weights to an assembly site.

The objective of the invention is met by the features disclosed in the independent patent claims.

A ferry comprising an arrangement for assembling weights on underwater pipes, is defined in claim 1.

A method for assembling weights on underwater pipes, is characterized by the features of claim 3.

According to the present invention, a ferry comprises an arrangement for assembling weights on underwater pipes, the arrangement comprising means for attaching a set of weights to the ferry so that the weights are under the water line, wherein said means for attaching said weights to the ferry comprises a beam to which said weights are attachable, the arrangement further comprising a winch for lifting up and/ or lowering said beam with said set of weights attached thereto under the ferry, wherein the arrangement is configured for attaching the set of weights to the ferry in such a way that the center of gravity of the weights directs about the center of the ferry, wherein the arrangement is configured for transferring the beam in a horizontal configuration with the set of weights attached thereto to an assembly site with the beam and the weights remaining all the time under water, and then arranging said weights on an underwater pipe.

There is also provided a method for assembling weights on underwater pipes, comprising at least the following steps: providing the ferry defined above, arranging said weights in a set of weights, attaching said set of weights to the ferry so that the weights are at least partially under the water line, wherein the set of weights is attached to the ferry in such a way that the center of gravity of the weights directs about the center of the ferry, tranferring said set of weights to an assembly site, and arranging said weights on an underwater pipe.

In an embodiment, the method further comprises a step of arranging the weights to a desired distance from each other to the set of the weights. Setting the distance between the weights at the same time when arranging the weights in the set of weights can be advantageous, because in this way the weights may already be in a suitable distance, when setting on the pipe to be anchored.

Yet, in an embodiment, the weights are remotely releasable from the arrangement. This embodiment enables setting of the weights onto the pipe without a need of a diver to guiding the weights. The arrangement may further comprise other means for setting the weights, such as a camera.

Significant advantages can be achieved with the present invention when compared to prior art solutions. According to the present method, weights to be transferred are arranged in water and they stay underwater throughout the whole assembly procedure. This provides many advantages, such as because the buoyancy of water, the weights are lighter to transfer, when floating to an assembly site. Thus, more weights may be transferred at one trip, and a smaller vessel can be used.

In addition, the weights may be possible to attach to the ferry in such a way that the mass of the weights does not affect the ferry by tilting it.

Because the weights are already in the water, a crane is not required in the ferry to lift the weights from the ferry into the water. Only a winch may be needed in the ferry for lifting up and lowering the set of weights in water. A winch is much lighter than a crane, and it does not require as much space on the deck of the ferry.

The expression "waterfront" refers herein to coast side near to the water, and the expression "waterside" refers herein to water area near to the coast.

The expression "a number of" refers herein to any positive integer starting from one (1), e.g. to one, two, or three.

The terms "a" and "an", as used herein, are defined as one or more than one.

### Short description of the drawings

Next, the invention is described in more detail with reference to the appended drawings, in which
Fig. 1a depicts a side view of the ferry according to an embodiment of the present invention in waterside, near of a coast;
Fig. 1b depicts a front view of Fig. 1a;
Fig. 2a depicts a side view of the arrangement lifting up the weights;
Fig. 2b depicts a front view of Fig. 2a;
Fig. 3a depicts a side view of the arrangement during transferring to an assembly site;
Fig. 3b depicts a front view of Fig. 3a;
Fig. 4a depicts a side view of the arrangement lowering down the weights;
Fig. 4b depicts a front view of Fig. 4a;
Fig. 5a depicts a side view of the arrangement in the assembly site;
Fig. 5b depicts a front view of Fig. 5a;
Fig. 6 is a flowchart depicting a method according to an embodiment of the present invention.

### Detailed description of the embodiments

In the Figures herein, unique features receive unique reference numerals, while features that are the same in more than one drawing receive the same reference numerals throughout. Further, certain terms of orientation may be used, such as "upper," "lower," "top," "bottom," "left," "right," "inside," "outside," "interior," "exterior," "inner," and "outer." These terms are generally for convenience of reference, and should be so understood unless a particular embodiment requires otherwise.

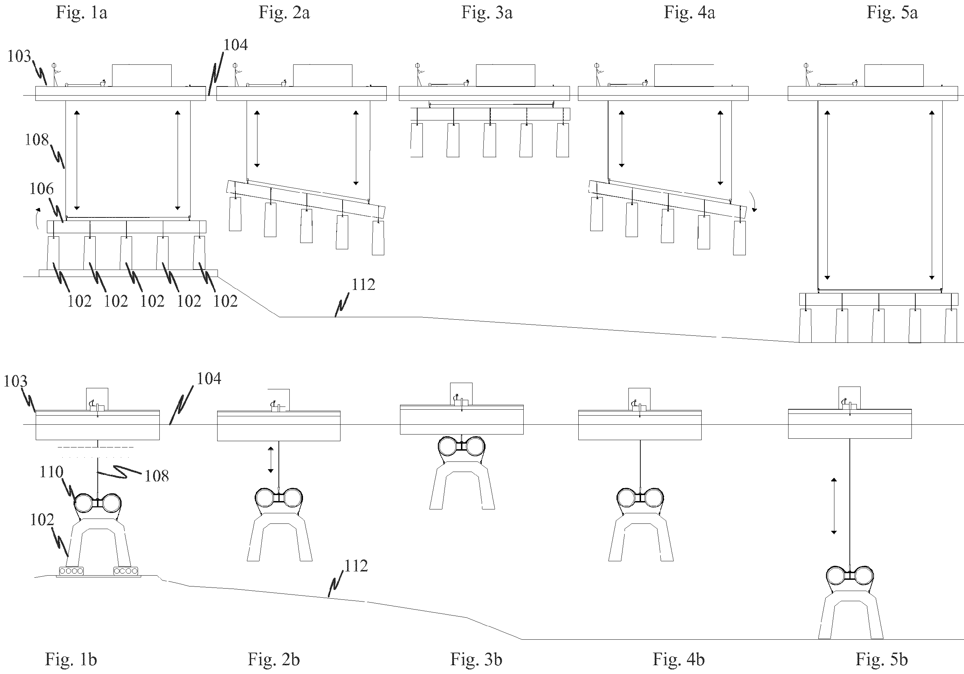

Fig. 1a depicts a side view of the arrangement in waterside, near of a coast; and Fig. 1b depicts a front view of Fig. 1a. The arrangement for assembling weights on underwater pipes comprises means for attaching weights 102 to the ferry 103. As can be seen in Figs 1a and 1b, the weights 102 to be assembled on a pipe are arranged in a row in a waterside under the water surface 104, preferably near to the coast (not shown). Preferably, the weights 102 are arranged in the water deep enough, so that the ferry 103 can be arranged above the weights.

The weights 102 can be moved and arranged in a row by means of a crane (not shown), for example, which can be in the waterfront or in the ferry 103. The weights can be arranged in waterfront, i.e. on dry land, and lifted into the water after that, or the weights can be lifted into the water and be arranged in a row in the water.

The arrangement according to the present invention comprises a means for attaching the weights to a ferry. As depicted in Figs 1a and 1b, the arrangement comprises a beam 106 to which the weights 102 can be attached. Naturally, the beam 106 comprises means for connecting the set of weights to the ferry, such as at least one rope/chain 108, for lifting up and lowering the beam 106 with the weights 102, near to the bottom of the ferry 103 and down in the water.

In an embodiment the beam 106 comprises means for attaching the weights 102 in it, such as shackles and/or hooks and/or notches (not shown). According to one embodiment, the attaching means for the weights are remote releasable. However, in other embodiments the attaching means for weights can be releasable by a diver manually, for example.

Further, the arrangement according to an embodiment comprises means for arranging the weights in desired distances from each other. The distance setting means for setting the distance between weights can be arranged in connection with the beam 106. The distance setting means is preferably a middle piece 110, such as but not limited to, a piece of a tube, which is preferably made of plastic not to increasing the mass of the arrangement.

The arrangement further comprises a winch (not shown) for lifting the beam 106 and the weights 102 up near to the bottom of the ferry 103, when starting to transfer the weights to the assembly site, and lowering them to their place on a pipe in the assembly site to the bottom of the water 112, as depicted in figs 2a, 2b and 4a, 4b. The winch is arranged in the ferry 103 and it is naturally connected to the beam 106.

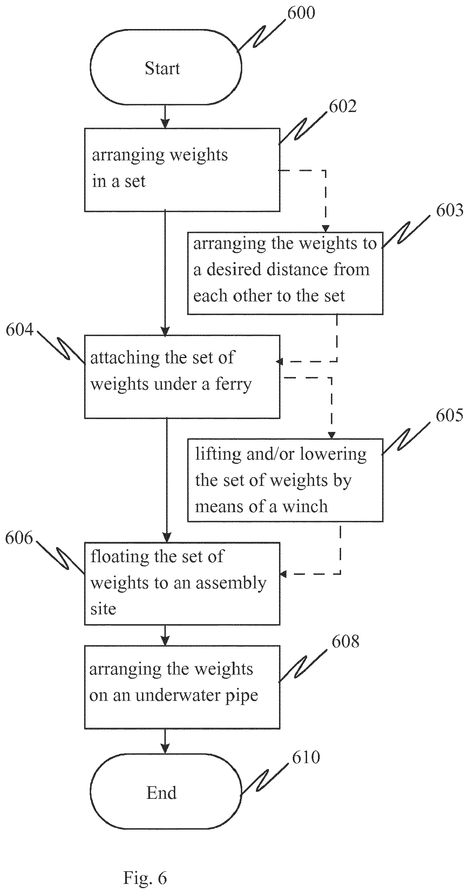

Fig. 6 is a flowchart depicting a method according to an embodiment of the present invention. According to an embodiment, the method for assembling weights on underwater pipes comprises at least following steps. At the step 600, the method starts. A pipe or pipes has been laid down in water, such as a bottom of a sea or a lake, and weights for keeping the pipe in its place has been arranged to a waterfront in order to assemble them on the pipe.

At the step 602, the weights to be assembled are arranged in a set of weights. The set of weights comprises a number of weights that can be transferred at the same time. The number of the weights in a set highly depends on the mass of the weights and the size and carriage capacity of a ferry that is used for transferring. In one exemplary embodiment, the ferry can transfer five weights having mass of 3000 kg each at the same time. So, in this case the set of weights comprises five weights to be transferred from the coast to an assembly site at the same time. As described above, the weights can be arranged in a set in a waterfront or in waterside.

In an embodiment, the method comprises a step 603 of arranging the weights to a desired distance from each other to the set. As described above, the arrangement according to the present invention can comprises a means for setting the weights in a suitable distance from each other.

At the step 604, the set of weights is attached to a ferry. Preferably, the set of weights are arranged in waterside, so that the ferry can be guided above or aside of the set of weights in order to attach the set of the weights to the ferry. The set of weights is attached to the ferry in such a way that the center of gravity of the weights directs about the center of the ferry, so that the mass of the weights does not cause problems to the ferry.

The method comprises a step 605 of lifting up and/or lowering said set of weights by means of a winch. As described above, the arrangement comprises a winch for lifting up and/or lowering the set of the weights. Advantageously, the set of weights is lifted up, after the set of weights has been attached and the ferry is ready to move.

At the step 606, set of weights is floated to an assembly site. The weights remain all the time under water, so the buoyancy of water lightens the weights.

At the step 608, the weights are arranged on the tube. The person skilled in the art understands that the step 605 can be performed in the assembly site for lowering the weights. In another embodiment, the weights are remotely released, which can be done after lowering the set of the weights. The weights may alternatively be released in another way, such as manually by a diver.

At the step 610, the ferry is ready to return. In an embodiment, the beam for fixing the weights can be lifted up by means of the winch, before returning.

## Claims

1. A ferry (103) comprising an arrangement for assembling weights (102) on underwater pipes, the arrangement comprising means for attaching a set of weights to the ferry so that the weights are under the water line (104), wherein said means for attaching said weights to the ferry (103) comprises a beam (106) to which said weights (102) are attachable, the arrangement further comprising a winch for lifting up and/or lowering said beam (106) with said set of weights attached thereto under the ferry (103), wherein the arrangement is configured for attaching the set of weights (102) to the ferry (103) in such a way that the center of gravity of the weights directs about the center of the ferry (103), wherein the arrangement is configured for transferring the beam in a horizontal configuration with the set of weights (102) attached thereto to an assembly site with the beam and the weights remaining all the time under water, and then arranging said weights on an underwater pipe.

2. A ferry according to claim 1, wherein said weights (102) are remotely releasable from the arrangement.

3. A method for assembling weights on underwater pipes, comprising at least the following steps:
- providing a ferry (103) according to claim 1 or 2,
- arranging said weights in a set of weights (102),
- attaching said set of weights (102) to the ferry (103) so that the weights (102) are at least partially under the water line (104), wherein the set of weights is attached to the ferry in such a way that the center of gravity of the weights (102) directs about the center of the ferry (103),
- tranferring said set of weights (102) to an assembly site, and
- arranging said weights (102) on an underwater pipe.

4. A method according to claim 3, comprising a step of arranging said weights (102) to a desired distance from each other to said set of the weights (102).

## Patentansprüche

1. Fähre (103), umfassend eine Anordnung zur Montage von Gewichten (102) an Unterwasserrohren, wobei die Anordnung ein Mittel zum Anbringen eines Satzes von Gewichten an der Fähre umfasst, so dass die Gewichte sich unter der Wasserlinie (104) befinden, wobei das Mittel zum Anbringen der Gewichte an der Fähre (103) einen Träger (106) umfasst, an dem die Gewichte (102) anbringbar sind, wobei die Anordnung ferner eine Winsch zum Anheben und/oder Absenken des Trägers (106) mit dem daran angebrachten Satz von Gewichten unter der Fähre (103) umfasst, wobei die Anordnung zum Anbringen des Satzes von Gewichten (102) an der Fähre (103) in einer solchen Weise ausgebildet ist, dass der Schwerpunkt der Gewichte mit der Mitte der Fähre (103) ausgerichtet ist, wobei die Anordnung zum Überführen des Trägers in eine horizontale Konfiguration mit dem daran angebrachten Satz von Gewichten (102) an einen Montageort ausgebildet ist, an dem der Träger und die Gewichte alle unter Wasser bleiben, und dann die Gewichte an einem Unterwasserrohr angeordnet werden.

2. Fähre nach Anspruch 1, wobei die Gewichte (102) durch Fernsteuerung von der Anordnung gelöst werden können.

3. Verfahren zur Montage von Gewichten an Unterwasserrohren, umfassend wenigstens die folgenden Schritte:
- Bereitstellen einer Fähre (103) nach Anspruch 1 oder 2,
- Anordnen der Gewichte als Satz von Gewichten (102),
- Anbringen des Satzes von Gewichten (102) an der Fähre (103), so dass die Gewichte (102) sich zumindest teilweise unter der Wasserlinie (104) befinden, wobei der Satz von Gewichten an der Fähre in solch einer Weise angebracht wird, dass der Schwerpunkt der Gewichte (102) mit der Mitte der Fähre (103) ausgerichtet ist,
- Überführen des Satzes von Gewichten (102) an einen Montageort und
- Anordnen der Gewichte (102) an einem Unterwasserrohr.

4. Verfahren nach Anspruch 3, umfassend einen Schritt des Anordnens der Gewichte (102) in einem gewünschten Abstand voneinander zu dem Satz von Gewichten (102).

## Revendications

1. Ferry (103) comprenant un agencement d'assemblage de poids (102) sur des tuyaux sous l'eau, l'agencement comprenant un moyen pour fixer un jeu de poids au ferry de façon à ce que les poids soient sous la ligne d'eau (104), dans lequel ledit moyen pour fixer lesdits poids au ferry (103) comprend une barre (106) à laquelle lesdits poids (102) peuvent être fixés, l'agencement comprenant en outre un treuil pour lever et/ou abaisser ladite barre (106) avec ledit jeu de poids fixé dessus sous le ferry (103), dans lequel l'agencement est configuré pour fixer le jeu de poids (102) au ferry (103) de façon à que le centre de gravité des poids se dirige sur le centre du ferry (103), dans lequel l'agencement est configuré pour transférer la barre dans une configuration horizontale avec le jeu de poids (102) fixé dessus à un site d'assemblage avec la poutre et les poids restant tout le temps sous l'eau, puis pour agencer lesdits poids sur un tuyau sous l'eau.

2. Ferry selon la revendication 1, dans lequel lesdits poids (102) peuvent être libérés à distance de l'agencement.

3. Procédé pour assembler des poids sur des tuyaux sous l'eau, comprenant au moins les étapes suivantes :
- fournir un ferry (103) selon la revendication 1 ou 2,
- agencer lesdits poids dans un jeu de poids (102),
- fixer ledit jeu de poids (102) au ferry (103) de façon à ce que les poids (102) soient au moins partiellement sous la ligne d'eau (104), dans lequel le jeu de poids est fixé au ferry de façon à ce que le centre de gravité des poids (102) se dirige sur le centre du ferry (103),
- transférer ledit jeu de poids (102) vers un site d'assemblage, et
- agencer lesdits poids (102) sur un tuyau sous l'eau.

4. Procédé selon la revendication 3, comprenant une étape d'agencement desdits poids (102) à une distance souhaitée l'un de l'autre par rapport audit jeu de poids (102) .
